# EUROPÄISCHE PATENTSCHRIFT

(11) **EP 3 299 116 B1**
(45) Veröffentlichungstag und Bekanntmachung des Hinweises auf die Patenterteilung: **10.07.2024**
(21) Anmeldenummer: 17190575.5
(22) Anmeldetag: 12.09.2017
(51) Int. Cl.: B23P 15/00, B23K 26/342, F04D 29/28, B22F 7/08, B22F 5/00, B22F 3/105, B22F 10/80, B23K 9/04, B23K 9/167, B23K 9/173, B23K 10/02, F04D 29/02, F04D 29/22, B33Y 10/00, F01D 5/04, B33Y 80/00, B23K 101/00, B23K 103/00, B23K 103/04, B23K 103/10, B23K 103/08, B23K 103/18, B23K 103/14

(54) **VERFAHREN ZUR HERSTELLUNG ODER ZUR REPARATUR EINES BAUTEILS EINER ROTATIONSMASCHINE SOWIE BAUTEIL HERGESTELLT ODER REPARIERT NACH EINEM SOLCHEN VERFAHREN**
METHOD FOR PRODUCING OR REPAIRING A COMPONENT OF A ROTARY MACHINE AND COMPONENT PRODUCED OR REPAIRED ACCORDING TO SUCH A METHOD
PROCÉDÉ DE FABRICATION OU DE RÉPARATION D'UN COMPOSANT D'UNE MACHINE TOURNANTE ET COMPOSANT PRODUIT OU RÉPARÉ SELON UN TEL PROCÉDÉ

(30) Priorität: 22.09.2016 EP 16190145; 28.03.2017 EP 17163325
(43) Veröffentlichungstag der Anmeldung: 28.03.2018
(73) Patentinhaber: Sulzer Management AG, 8401 Winterthur (CH)
(72) Erfinder: Rettberg, Robin, 8400 Winterthur (CH); Maroccia, Bruno, 8404 Winterthur (CH)
(74) Vertreter: IPS Irsch AG

(56) Entgegenhaltungen:
- EP-A1- 2 022 987
- EP-A1- 2 669 042
- EP-A2- 1 533 071
- EP-A2- 1 952 932
- EP-A2- 2 957 380
- EP-A2- 3 034 228
- WO-A1-2014/074379
- DE-A1- 102004 043 746
- FR-A1- 2 901 305
- JP-A- 2004 308 647
- JP-A- 2004 314 168
- JP-A- H10 180 442
- US-A1- 2008 173 624
- US-B1- 6 269 540
- US-B1- 9 174 426
- KLOCKE FRITZ ET AL: "Turbomachinery component manufacture by application of electrochemical, electro-physical and photonic processes", CIRP ANNALS, ELSEVIER BV, NL, CH, FR, vol. 63, no. 2, 2 July 2014 (2014-07-02), pages 703 - 726, XP029041329, ISSN: 0007-8506, DOI: 10.1016/J.CIRP.2014.05.004

## Beschreibung

Die Erfindung betrifft ein Verfahren zur Herstellung eines Bauteils einer Rotationsmaschine gemäss dem Oberbegriff des unabhängigen Patentanspruchs 1. Die Erfindung betrifft ferner ein Verfahren zur Reparatur eines Bauteils einer Rotationsmaschine gemäss dem Oberbegriff des unabhängigen Patentanspruchs 13, sowie ein Bauteil einer Rotationsmaschine, das nach einem solchen Verfahren hergestellt oder repariert ist.

Die US 9 174 426 B1 offenbart die Merkmale des Oberbegriffs des Anspruchs 1. Sie offenbart ebenfalls ein Bauteil einer Rotationsmaschine. Die US 6 269 540 B1 offenbart ein Verfahren zur Reparatur eines Bauteils einer Rotationsmaschine.

Bei der Herstellung von Rotationsmaschinen wie z. B. Pumpen, Turbinen, Kompressoren, Verdichtern oder Expandern ist es bekannt, rotierende Laufräder, Pumpenräder, Impeller, sowie feststehende Diffusoren oder Leiträder als Bauteil aus einem Rohling durch zerspanende bzw. spanabhebende Bearbeitung, beispielsweise durch Fräsen, herauszuarbeiten. Dabei kann der Rohling als Vollmaterial vorliegen oder durch einen urformenden Fertigungssprozess bereits vorbearbeitet sein.

Ein solches Verfahren ist beispielsweise aus der EP-B-2 012 957 bekannt.

Das dort vorgeschlagene Verfahren zeichnet sich insbesondere dadurch aus, dass es eine zerspanende Herstellung des Bauteils ermöglicht, womit gemeint ist, dass das Bauteil gesamthaft aus dem Rohling mittels einer Zerspanvorrichtung zumindest im Wesentlichen in die gewünschte Endform gebracht wird. Das Zusammenfügen von vorgefertigten Komponenten des Bauteils, beispielsweise mittels Schweissens, ist bei einer solchen integralen Herstellung nicht mehr notwendig. Dies ist insbesondere deshalb vorteilhaft, weil Schweissnähte oder andere Verbindungsstellen an stark belasteten Teilen des Bauteils im Betriebszustand eine Schwachstelle darstellen können, die Ursache eines Risses oder einer anderen Schädigung, beispielsweise einer durch Korrosion bedingten, des Bauteils sein kann.

Somit ist insbesondere bei hoch belasteten Bauteilen eine zerspanende Herstellung ohne das Zusammenfügen von einzelnen Komponenten vorteilhaft. Daher werden solche Bauteile wie beispielsweise Laufräder (Impeller) von Pumpen aus massivem Material, je nach Anwendung z.B. aus hochfesten Edelstählen, Superlegierungen, anderen geeigneten Metallen oder Metalllegierungen oder auch aus nicht metallischen Werkstoffen, beispielsweise keramischen, gefertigt und die Schaufeln und Kanäle des Laufrads werden durch spanabhebende Bearbeitung, z.B. durch Fräsen, aus diesem Material herausgearbeitet.

Wie dies auch in der EP-B-2 012 957 bereits dargelegt wird, ist jedoch manchmal aus rein geometrischen Gründen eine gesamthafte zerspanende Herstellung des Bauteils nicht möglich. Dies kann beispielsweise der Fall sein, wenn die Laufräder (Impeller) als gedeckte oder geschlossene Laufräder ausgestaltet sind. Bei einer solchen Ausgestaltung umfasst das Laufrad eine Nabenscheibe, auf welcher die Schaufeln angeordnet sind und ferner eine Deckscheibe, welche die Schaufeln auf Ihrer der Nabenscheibe abgewandten Seite ganz oder zumindest teilweise überdeckt. Somit bilden sich zwischen den Schaufeln zumindest teilweise geschlossene Kanäle aus, die sich jeweils vom Zentrum des Laufrads bis zu seiner äusseren radialen Begrenzungsfläche erstrecken.

Selbst wenn man in Betracht zieht, dass man mit einer Zerspanvorrichtung diese Kanäle von beiden Seiten, also vom Innenraum des Laufrads als auch von seiner radialen Begrenzungsfläche her, aus dem Rohling fräsen bzw. zerspanend bearbeiten kann, so ist klar, dass die Geometrie hier Grenzen setzt und in vielen Fällen eine gesamthafte zerspanende Herstellung unmöglich oder zumindest unwirtschaftlich macht.

In solchen Fällen, in denen es aus rein geometrischen Gründen nicht mehr möglich oder praktikabel ist, das Laufrad insgesamt in einem Stück aus massivem Material zu fräsen, ist es daher Stand der Technik, zunächst aus einem Rohling die Nabenscheibe und die Schaufeln zerspanend herauszuarbeiten. Die Kanäle zwischen den Schaufeln sind dann vollständig offene Kanäle, die in einfacher Weise herstellbar sind. Anschliessend wird die Deckscheibe aufgelegt und mit der Nabenscheibe bzw. den Schaufeln gefügt, beispielsweise verschweisst.

Alternativ ist es auch bekannt, die nicht mehr dem Fräsen zugänglichen Bereiche der Kanäle mit einem Erodierverfahren, beispielsweise Funkenerodieren (EDM: electrical discharge machining), zu fertigen. Diese Verfahren sind aber in der Regel vergleichsweise langsam und kostenintensiv.

Auch ist es Stand der Technik, solche Bauteile mit inneren Kanälen giesstechnisch herzustellen, wobei die inneren Kanäle dann durch eine entsprechende Ausgestaltung der Giessform bzw. der Giesskerne erzeugt werden. Ein Gussbauteil hat aber den Nachteil, dass beim Giessen Defekte beispielsweise in der Gefügestruktur entstehen können, welche die Belastbarkeit oder die Stabilität des Bauteils negativ beeinflussen. Desweiteren sind beim Giessprozess in der Regel die erreichbaren Oberflächengüten sowie die Masshaltigkeiten der nicht mehr dem Fräsen zugänglichen Bereiche limitiert.

In der EP-A-2 669 042, die ebenfalls die Merkmale des Oberbegriffs des Anspruchs 1 und ein entsprechendes Bauteil einer Rotationsmaschine offenbart, wird ein Verfahren zur zerspanenden Herstellung eines geschlossenen Laufrads vorgeschlagen, bei welchem das zu fertigende Bauteil (Laufrad) in zwei Subvolumen unterteilt wird, die an einer Trennfläche aneinandergrenzen. Dabei werden die Subvolumen so festgelegt, dass die Trennfläche keine der Begrenzungsflächen der Kanäle umfasst oder schneidet, und dass aus dem ersten Subvolumen, welches später die vollständigen Kanäle umfasst, die Kanäle gesamthaft mittels einem zerspanenden Verfahren, z. B. Fräsen, herausgearbeitet werden können. Das zweite Subvolumen, welches dann lediglich ein Teil der Deckscheibe ist, wird entweder als separate Komponente hergestellt und nach der Fertigstellung der Kanäle mit dem ersten Subvolumen gefügt, oder das zweite Subvolumen wird mittels eines auftragenden Bearbeitungsverfahrens, beispielsweise mittels Auftragschweissens auf dem ersten Subvolumen aufgebaut. Hierdurch soll es ermöglicht werden, die Kanäle vollständig durch eine zerspanende Herstellung zu fertigen. Aber auch dieses Verfahren unterliegt immer noch geometrisch bedingten Grenzen.

Dieses anhand geschlossener Laufräder erläuterte Problem gibt es aber auch bei anderen Bauteilen, die einen inneren Kanal aufweisen, dessen Lage oder Geometrie derart ist, dass eine gesamthafte zerspanende Herstellung insbesondere aus geometrischen Gründen nicht möglich oder nicht praktikabel ist. Als Beispiele seien hier geschlossene Leiträder, Diffusoren oder auch Kühlkanäle, beispielsweise für Kühlluft, in Turbinenschaufeln genannt.

Ausgehend von diesem Stand der Technik ist es daher eine Aufgabe der Erfindung, ein anderes Verfahren zur Herstellung eines Bauteils einer Rotationsmaschine vorzuschlagen, welches Bauteil mindestens einen inneren Kanal hat, mit welchem Verfahren insbesondere auch solche Bauteile herstellbar sind, die aus geometrischen Gründen keine gesamthaft zerspanende Herstellung des Kanals zulassen. Ferner soll durch die Erfindung ein entsprechendes Bauteil vorgeschlagen werden.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren zur Herstellung eines Bauteils einer Rotationsmaschine gemäß Anspruch 1 vorgeschlagen.

Im Rahmen der Erfindung stellt der Kern den Bereich des Bauteils dar, in welchem der innere Kanal in einen mittleren Bereich des Bauteils mündet. Bevorzugt, aber nicht notwendig umfasst der Kern die axiale Achse A, Teile der Schaufeln, sowie Teile der Nabenscheibe und der Deckscheibe.

Das erfindungsgemässe Verfahren kombiniert somit in vorteilhafter Weise eine subtraktive Bearbeitung, bei welcher Material von dem Rohling entfernt wird, mit einer additiven oder aufbauenden Bearbeitung, bei welcher Material aufgetragen wird. Dabei wird nur ein Teil des Kanals durch eine zerspanende Fertigung hergestellt, während der Rest des Kanals durch eine aufbauende Fertigung generiert wird. Besonders bevorzugt kann zwischen zwei aufbauenden Teilschritten selbstverständlich auch zur Feinbearbeitung ein subtraktiver Bearbeitungsschritt durchgeführt werden. Durch diese Kombination ist es möglich, einen Kanal mit - zumindest nahezu - beliebiger Geometrie zu generieren.

Mit einer aufbauenden Fertigung ist dabei eine Fertigung gemeint, bei welcher die Fertigung direkt aus einem formlosen oder formneutralen Material, beispielsweise durch Aufschmelzen, erfolgt.

Da mittels der subtraktiven Bearbeitung eine sich mindestens in die radiale Richtung erstreckende Aussenkontur im Bereich der Aussenfläche herausgearbeitet wird, ist es möglich, den Kanal mittels der aufbauenden Fertigung auf dem Rohling optimal fertigzustellen. So ist insbesondere gewährleistet, dass das Material während der aufbauenden Fertigung sicher aufgebracht werden kann, da der Materialauftrag unter einem optimalen Winkel erfolgen kann. Dies wirkt sich neben der optimalen Fertigstellung des Kanals auch positiv auf den Verbrauch des aufzubringenden Materials aus. Die Aussenkontur weisst dabei eine Aussenkonturfläche auf, deren Flächennormale sich unter einem Winkel von 0 bis 180° zur radialen Richtung erstreckt. Über die Aussenkonturfläche kann der Kanal in Richtung der Flächennormale aufgebaut und fertiggestellt werden.

Da die Abmessung der Aussenfläche des Rohlings in radialer Richtung kleiner ist als die Abmessung der Begrenzungsfläche des fertigen Bauteils in radialer Richtung, werden mit der aufbauenden Fertigung insbesondere die radial aussenliegenden Bereiche des Bauteils hergestellt, also beispielsweise der Teil des Kanals, welcher an die Begrenzungsfläche angrenzt, und welcher das zweite Ende des Kanals umfasst. Diese aufbauende Fertigung in radialer Richtung hat insbesondere auch den Vorteil, dass dann üblicherweise bei der aufbauenden Fertigung keine oder lediglich geringfügig überhängende Strukturen hergestellt werden müssen, was unter verfahrenstechnischen Aspekten besonders günstig ist.

Da der Rohling nicht giesstechnisch hergestellt werden muss, kann der Rohling vorteilhafterweise aus einem geschmiedeten Werkstoff bestehen, der dann zerspanend bearbeitet wird. Durch die zerspanende Bearbeitung bleiben alle Vorteile des geschmiedeten Werkstoff erhalten. Dabei wird in dem ersten subtraktiven Bearbeitungsschritt die sich mindestens in die radiale Richtung erstreckende Aussenkontur im Bereich der Aussenfläche, sowie ein Teil des Kanals, der sich zumindest teilweise radial im Rohling bis zum ersten Ende erstreckt, zerspanend hergestellt. Somit ist nach Beendingung des ersten subtraktiven Bearbeitungsschritts die sich in radialer Richtung erstreckende Aussenkontur und ein Teil des Kanals fertiggestellt, der an einem ersten Ende eines Kerns eines Zentrums des Rohlings bzw. Bauteils beginnt und sich bis an die Aussenfläche des Rohlings erstreckt. Dabei kann der erste subtraktive Bearbeitungsschritt entweder ein Fräsen von der Aussenfläche des Rohlings aus umfassen, oder ein Fräsen vom Zentrum des Rohlings. Insbesondere ist es natürlich auch möglich, dass der erste subtraktive Bearbeitungsschritt, sowohl ein Fräsen bzw. ein zerspanendes Bearbeiten vom Zentrum aus als auch ein Fräsen von der Aussenfläche des Rohlings aus umfasst.

Nachdem der erste subtraktive Bearbeitungsschritt beendet ist, wird mittels einer aufbauenden Fertigung der Kanal fertiggestellt und das Bauteil in seine endgültige Form gebracht.

Gemäss einer besonders bevorzugten Ausführungsform wird der erste subtraktive Bearbeitungsschritt so durchgeführt, dass die Aussenkontur Teile einer Deckscheibe des Bauteils und/oder Teile einer Nabenscheibe des Bauteils umfasst. Hierdurch wird die Fertigstellung des Kanals mittels der aufbauenden Fertigung wesentlich vereinfacht, da ein grösserer Flächenanteil zur Aufbringung des Materials zur Verfügung steht.

Vorzugsweise erfolgt die aufbauende Fertigung schichtweise. Dabei ist es möglich, dass die aufbauende Fertigung schichtweise in zumindest einer zur axialen Richtung senkrechten Richtung durchgeführt wird. Natürlich ist es auch möglich, dass die aufbauende Fertigung schichtweise zusätzlich in die axiale Richtung durchgeführt wird. Zudem ist es auch möglich, dass die aufbauende Fertigung schichtweise zusätzlich in einer sich zu der radialen Richtung unter einem Winkel Alpha erstreckenden Umfangsrichtung durchgeführt wird. Der Winkel Alpha beträgt dabei 0 bis 180°, bevorzugt 30° bis 150°, besonders bevorzugt 60 bis 120°.

In einer bevorzugten Ausführungsform umfasst das Bauteil eine Mehrzahl von inneren Kanälen, von denen sich jeder von dem ersten Ende vom Kern des Rohlings bis an ein zweites Ende an der radialen Begrenzungsfläche des Bauteils erstreckt, wobei benachbarte Kanäle jeweils durch eine Trennwand getrennt sind. Dabei wird in dem ersten subtraktiven Bearbeitungsschritt von jedem Kanal jeweils ein Teil des Kanals hergestellt, welcher Teil sich von dem jeweiligen ersten Ende des Kanals bis in die Aussenfläche des Rohlings erstreckt, und wobei erst mittels der aufbauenden Fertigung jede Trennwand und jeder Kanal fertiggestellt wird.

Vorzugsweise ist der Rohling ein massiver und insbesondere rotationssymmetrischer Körper. Jedoch kann im Zentrum des Rohlings bevorzugt eine zylindrische axiale und durchgängige Bohrung vorgesehen sein, welche beispielsweise dazu dient, das fertiggestellte Bauteil auf einer Welle, z.B. der Antriebswelle einer Pumpe zu fixieren. D. h. vorzugsweise weist der Rohling vor dem ersten subtraktiven Bearbeitungsschritt eine zentrale Bohrung auf, welche radial innenliegend so angeordnet ist, dass im fertiggestellten Zustand des Bauteils jedes im Zentrum liegende erste Ende eines Kanals durch einen Ringkörper von der zentralen Bohrung getrennt ist.

Eine weitere bevorzugte Massnahme besteht darin, dass die aufbauende Fertigung mehrere additive Bearbeitungsschritte umfasst, um das Bauteil sukzessive aufzubauen.

Dabei ist es besonders bevorzugt, wenn zwischen den additiven Bearbeitungsschritten mindestens ein weiterer subtraktiver Bearbeitungsschritt durchgeführt wird. In diesem weiteren subtraktiven Bearbeitungsschritt kann dann z. B. durch Fräsen, Schleifen oder Polieren die in dem vorangehenden additiven Bearbeitungsschritt aufgebaute Struktur nachbearbeitet werden. Durch diese Massnahme lässt sich eine Oberflächenoptimierung realisieren oder eine besonders gute Geometrietreue erzielen.

Es sind heute Bearbeitungsvorrichtungen bekannt, mit denen sowohl additive Fertigungen, beispielsweise Laserauftragsschweissen, als auch subtraktive Fertigungen, beispielsweise Fräsen oder Schleifen durchführbar sind. Solche Vorrichtungen haben beispielsweise verschiedene Bearbeitungsköpfe, die automatisch wechselbar sind, wobei ein Bearbeitungskopf beispielsweise für Laserauftragsschweissen ausgestaltet ist, während ein anderer Bearbeitungskopf für Fräsen ausgestaltet ist. Gerade solche Bearbeitungsvorrichtungen erlauben einen schnellen und problemlosen Wechsel zwischen subtraktiven und additiven Bearbeitungsverfahren, ohne dass dafür das zu bearbeitende Werkstück umgespannt oder in eine andere Bearbeitungsstation transferiert werden müsste. Dies ermöglicht eine besonders rasche, kostengünstige und hochqualitative Herstellung von Bauteilen, die sehr präzise gefertigt sind.

Eine mögliche Variante besteht darin, dass nach dem ersten subtraktiven Bearbeitungsschritt das Bauteil komponentenweise aufgebaut wird, wobei vorzugweise zunächst nur jede Trennwand fertiggestellt wird. So werden beispielsweise nach Abschluss des ersten subtraktiven Bearbeitungsschritts zunächst alle Trennwände zwischen den Kanälen komplett aufgebaut und erst anschliessend werden dann die noch fehlenden Teile aufgebaut, z.B. diejenigen, welche die Kanäle zu geschlossenen Kanälen machen.

Aus verfahrenstechnischen Gründen ist es besonders bevorzugt, wenn die aufbauende Fertigung mit Hilfe eines Lasers durchgeführt wird. Inbesondere ist das Verfahren des Laserauftragschweissens für die aufbauende Fertigung geeignet.

Für die Praxis besonders relevante Anwendungen sind es, wenn das Bauteil als Laufrad, als Leitrad oder als Diffusor einer Rotationsmaschine ausgestaltet ist, insbesondere einer Pumpe, einer Turbine, eines Kompressors, eines Verdichters oder eines Expanders.

Es hat sich gezeigt, dass das erfindungsgemässe Verfahren in einer sinngemäss gleichen Weise auch sehr vorteilhaft für die Reparatur von beschädigten oder verschlissenen Bauteilen einer Rotationsmaschine eingesetzt werden kann. Dementsprechend wird durch die Erfindung ferner ein Verfahren zur Reparatur eines Bauteils einer Rotationsmaschine gemäß Anspruch 13 vorgeschlagen.

Erfindungsgemäss wird dabei in einem ersten subtraktiven Bearbeitungsschritt der Rohling derart subtraktiv bearbeitet, dass eine sich mindestens in die radiale Richtung erstreckende Aussenkontur im Bereich der Aussenfläche herausgearbeitet wird. Anschliessend werden die Kanäle mittels einer aufbauenden Fertigung auf dem Rohling fertiggestellt, wobei bevorzugt zusätzlich alle entfernten beschädigten Bereiche mittels der aufbauenden Fertigung wieder ergänzt werden.

Bei dem erfindungsgemässen Verfahren zur Reparatur eines Bauteils wird also in sinngemäss gleicher Weise wie bei dem Verfahren zur Herstellung eines Bauteils ein Rohling hergestellt, auf welchem anschliessend die noch fehlenden Komponenten oder Bereiche des Bauteils mittels aufbauender Fertigung hergestellt werden. Bei dem Verfahren zur Reparatur wird dabei der Rohling durch das Entfernen der beschädigten Bereiche des Bauteils generiert. Nachdem der Rohling durch Entfernen der beschädigten Bereiche hergestellt ist, entspricht er vom Prinzip dem Rohling des Verfahrens zur Herstellung des Bauteils nach Durchführung des ersten subtraktiven Bearbeitungsschritts.

Das Entfernen der beschädigten Bereiche kann mit einem zerspanenden Verfahren, beispielsweise mittels Fräsen oder Drehen erfolgen. Es ist aber auch alternativ oder ergänzend möglich, die beschädigten Bereiche durch einen trennenden Prozess, wie beispielsweise Stanzen, Schneiden, Brennschneiden oder Sägen zu entfernen.

Eine weitere vorteilhafte Massnahme sowohl für das Verfahren zur Herstellung eines Bauteils als auch für das Verfahren zur Reparatur eines Bauteils besteht darin, dass für die aufbauende Fertigung mindestens ein Material verwendet wird, das verschieden von dem Material ist, aus welchem der Rohling besteht. So können bei der aufbauenden Fertigung ein oder mehrere verschiedene Materialien bzw. Werkstoffe verwendet werden, um gezielt in vorgebbaren Bereichen des Bauteils seine Eigenschaften zu optimieren. Beispielsweise ist es möglich, diejenigen Bereiche des Bauteils, welche im Betriebszustand den höchsten Belastungen ausgesetzt sind, aus einem besonders harten oder einem besonders verschleissfesten oder einem besonders korrosionsresistenten Material anzufertigen. Bei dem Laufrad einer Pumpe sind diese besonders stark beanspruchten Bereiche beispielsweise die radial aussenliegenden Bereiche der Trennwände (Schaufeln) zwischen den Kanälen, also die Austrittskanten der Schaufeln sowie der Bereich der radialen Begrenzungsfläche des Laufrads. Diese Bereiche können dann bei der aufbauenden Fertigung aus einem besonders verschleissfesten Material gefertigt werden.

Natürlich ist es auch möglich, während der aufbauenden Fertigung das Material zu wechseln, also beispielsweise bei der aufbauenden Fertigung zunächst ein Material zu verwenden, das beispielsweise das gleiche ist, wie das Material des Rohlings, und anschliessend beispielsweise für die radial aussenliegenden Bereiche des Bauteils ein davon verschiedenes Material.

Auf diese Weise ist es auch möglich, mittels der aufbauenden Fertigung eine Beschichtung auf einzelnen Komponenten oder Bereichen des Bauteils zu generieren, beispielsweise eine Verschleissschutzbeschichtung.

Durch diese Massnahme ist es somit z. B. möglich, an Verschleissflächen des Bauteils gezielt eine höhere Härte des Bauteils zu realisieren. Hierdurch lässt sich die Lebensdauer des Bauteils erhöhen. Bei dem Laufrad einer Pumpe ist es insbesondere dann auch möglich, auf einen Verschleissring zu verzichten und diesen durch eine Beschichtung zu ersetzen, die mittels der aufbauenden Fertigung generiert wird.

Durch die Erfindung wird ferner ein Bauteil einer Rotationsmaschine vorgeschlagen, welches nach einem erfindungsgemässen Verfahren hergestellt oder repariert ist.

Gemäss einer bevorzugten Ausgestaltung des Bauteils ist jede Trennwand als Schaufel ausgestaltet.

Für die Praxis besonders wichtige Ausführungen sind es, wenn das Bauteil als Laufrad, als Leitrad oder als Diffusor einer Rotationsmaschine, insbesondere einer Pumpe, einer Turbine, eines Kompressors, eines Verdichters oder eines Expanders ausgestaltet ist.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine perspektivische Darstellung eines Ausführungsbeispiels eines erfindungsgemässen Bauteils, das gemäss einem Ausführungsbeispiel eines erfindungsgemässen Verfahrens hergestellt ist,
- Fig. 2:: eine perspektivische Darstellung eines Ausführungsbeispiels eines Rohlings für die Durchführung eines Ausführungsbeispiels eines erfindungsgemässen Verfahrens,
- Fig. 3:: eine Schnittdarstellung des Rohlings aus Fig. 2 in einem Schnitt in axialer Richtung,
- Fig.4:: eine perspektivische Darstellung eines Ausführungsbeispiels eines Rohlings nach Beendigung des ersten subtraktiven Bearbeitungsschritts, und
- Fig. 5:: eine Draufsicht des Rohlings aus Fig.4.

Das erfindungsgemässe Verfahren dient zur Herstellung eines Bauteils einer Rotationsmaschine, wobei das Bauteil mindestens einen inneren Kanal aufweist, der sich aus einem Zentrum bis an eine Begrenzungsfläche des Bauteils erstreckt und zumindest teilweise geschlossen ist. Mit einem geschlossenen Kanal ist dabei ein Kanal gemeint, der abgesehen von einem Einlass oder einem Auslass vollständig geschlossen ist, also rohrförmig ausgestaltet ist, das heisst der Kanal ist senkrecht zu seiner Hauptströmungsrichtung überall von einer oder mehreren Wandung(en) begrenzt. Im Unterschied dazu ist mit einem offenen Kanal ein solcher gemeint, der in einer Richtung senkrecht zu seiner Hauptströmungsrichtung, also in einer Richtung senkrecht zu seiner Längserstreckung nicht durch eine Wandung begrenzt, sondern offen ist. So ist beispielsweise ein Kanal mit einer U-förmigen oder V-förmigen Wandung ein offener Kanal. Würde man die offene Seite des U-Profils oder des V-Profils mit einer Decke überdecken, so wäre der Kanal ein geschlossener Kanal.

Mit einem teilweise geschlossenen Kanal ist dann ein solcher gemeint, der teilweise als geschlossener Kanal und teilweise als offener Kanal ausgestaltet ist.

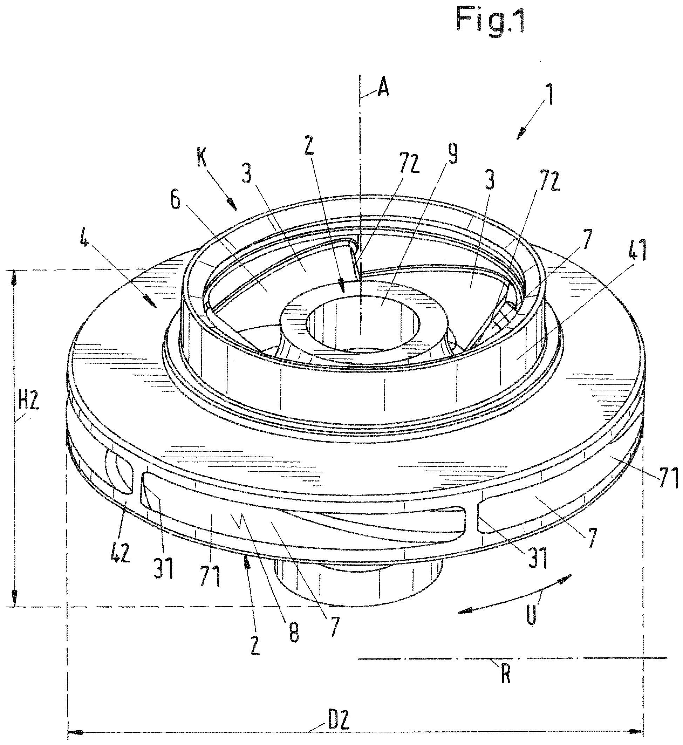

Bei der folgenden Beschreibung der Erfindung wird mit beispielhaftem Charakter auf ein für die Praxis wichtiges Beispiel Bezug genommen, bei welchem das Bauteil ein geschlossenes bzw. gedecktes Laufrad (Impeller) einer Turbomaschine, z. B. einer Pumpe ist. Zum besseren Verständnis zeigt Fig. 1 eine perspektivische Darstellung eines Ausführungsbeispiels eines erfindungsgemässen Bauteils, das ein geschlossenes Laufrad ist, und das gesamthaft mit dem Bezugszeichen 1 versehen ist. Das Laufrad 1 ist mittels eines erfindungsgemässen Verfahrens herstellbar.

Das Bauteil 1 bzw. das Laufrad 1 erstreckt sich sowohl in einer axialen Richtung A als auch in einer dazu senkrechten radialen Richtung R. Mit der axialen Richtung A ist dabei üblicherweise diejenige Richtung gemeint, welche durch die Drehachse der Rotationsmaschine festgelegt ist, wenn das Bauteil 1 in die Rotationsmaschine eingebaut ist. Die Drehachse ist diejenige Achse, um welche der Rotor der Rotationsmaschine im Betriebszustand rotiert.

Im Betriebszustand rotiert das Laufrad 1 also um die Drehachse, welche die axiale Richtung A festlegt. Eine Richtung senkrecht zu dieser axialen Richtung A wird als radiale Richtung R bezeichnet.

Das Laufrad 1 ist ein bezüglich der axialen Richtung A rotationssymmetrisches Bauteil und umfasst in an sich bekannter Weise eine Nabenscheibe 2, mit welcher das Laufrad 1 üblicherweise auf einer nicht dargestellten Achse oder Welle montiert oder befestigt wird, ferner mehrere Schaufeln 3, die auf der Nabenscheibe 2 angeordnet sind, sowie eine Deckscheibe 4, welche die Schaufeln 3 auf ihrer der Nabenscheibe 2 abgewandten Seite bzw. Kante zumindest teilweise überdeckt. Dabei erstreckt sich die Deckscheibe 4 bezüglich der axialen Richtung A darstellungsgemäss (Fig. 1) höher als die Nabenscheibe 2. Dadurch ist darstellungsgemäss oberhalb der Schaufeln 3 ein Innenraum 6 ausgebildet, der bezüglich der radialen Richtung R von der Deckscheibe 4 begrenzt wird. Dieser Innenraum 6 stellt im Betriebszustand den Einlass dar, durch welchen ein Fluid das Laufrad 1 anströmt. Zwischen zwei benachbarten Schaufeln 3 existiert jeweils ein innerer Kanal 7, der als zumindest teilweise geschlossener Kanal 7 und hier als geschlossener Kanal 7 ausgestaltet ist.

Jeder Kanal 7 erstreckt sich von einem ersten Ende 72 in einem Zentrum des Laufrads 1, das durch den Innenraum 6 gebildet wird, bis an ein jeweiliges zweites Ende 71 in einer Begrenzungsfläche 42 des Laufrads 1. Die Begrenzungsfläche 42 stellt die radial äussere Oberfläche des Laufrads 1 dar, welche sich parallel zur axialen Richtung A erstreckt, also die Oberfläche, welche das Laufrad 1 in radialer Richtung R nach aussen begrenzt. Mit "parallel zur axialen Richtung A" ist dabei gemeint, dass jeder Flächennormalenvektor der Begrenzungsfläche 42 senkrecht auf der axialen Richtung A steht. Die Begrenzungsfläche 42 umfasst die radial äusseren Oberflächen der Deckscheibe 4 und der Nabenscheibe 2 sowie die radial äusseren Abschlusskanten der Schaufeln 3, die als Austrittskanten 31 bezeichnet werden.

Somit sind benachbarte Kanäle 7 jeweils durch eine Trennwand 3 getrennt, wobei jede Trennwand 3 jeweils eine Schaufel 3 des Laufrads 1 bildet.

Je nach Ausgestaltung des Laufrads 1 ist es natürlich auch möglich, dass die Abschlusskanten der Schaufeln 3 bezüglich der radialen Richtung zurück versetzt sind, also nicht in der Begrenzungsfläche 42 liegen. Die Deckscheibe 4 und/oder die Nabenscheibe 2 ragen dann bezüglich der radialen Richtung R über die Schaufeln 3 bzw. über die Abschlusskanten der Schaufeln 3 hinaus.

Eine solche Ausgestaltung ist insbesondere auch bei einem Laufrad einer Turbine möglich, bei dem die äusseren Abschlusskanten der Schaufeln 3 üblicherweise die Eintrittskanten darstellen.

Jeder der geschlossenen Kanäle 7 ist somit von einer Begrenzungsfläche 8 umschlossen, die sich jeweils aus den einander zugewandten Oberflächen zweier benachbarter Schaufeln 3, sowie den dazwischenliegenden Oberflächensegmenten der einander zugewandten Oberflächen der Nabenscheibe 2 und der Deckscheibe 4 zusammensetzt, welche Oberflächensegmente den Boden und die Decke des jeweiligen Kanals 7 bilden. Die Schaufeln 3 bilden also jeweils eine Trennwand zwischen zwei benachbarten inneren Kanälen 7. Das zweite Ende 71 jedes Kanals 7 umfasst die Einmündung, mit welcher der jeweilige Kanal 7 in die Begrenzungsfläche 42 einmündet. In Umfangsrichtung benachbarte zweite Enden 71 sind jeweils durch eine Austrittskante 31 voneinander getrennt.

Das Laufrad 1 weist zudem eine durchgängige zentrale axiale Bohrung 9 auf, welche zur Aufnahme einer Welle oder einer Achse dient, auf welcher das Laufrad 1 montiert werden kann.

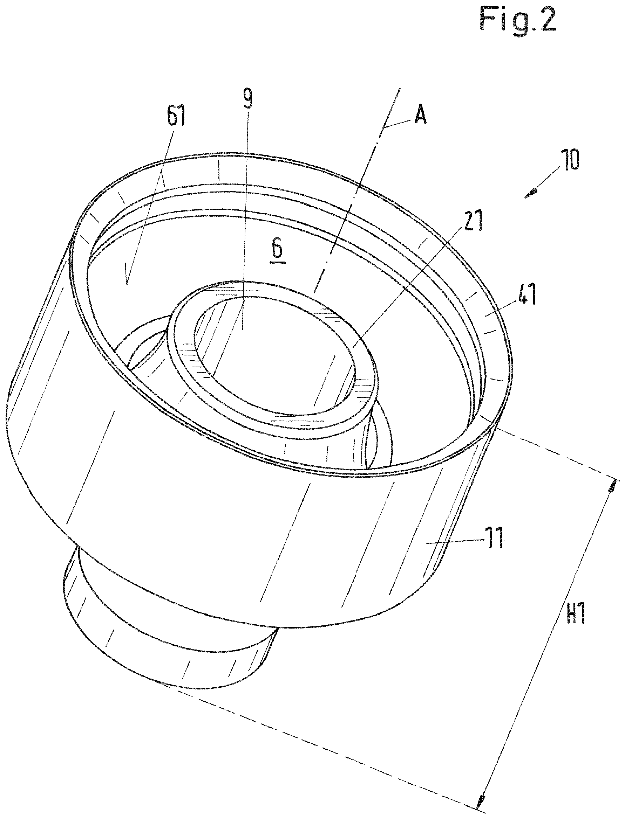

Im Folgenden wird nun anhand der Fig. 2 bis 5 eine Ausführungsform des erfindungsgemässen Verfahrens näher erläutert.

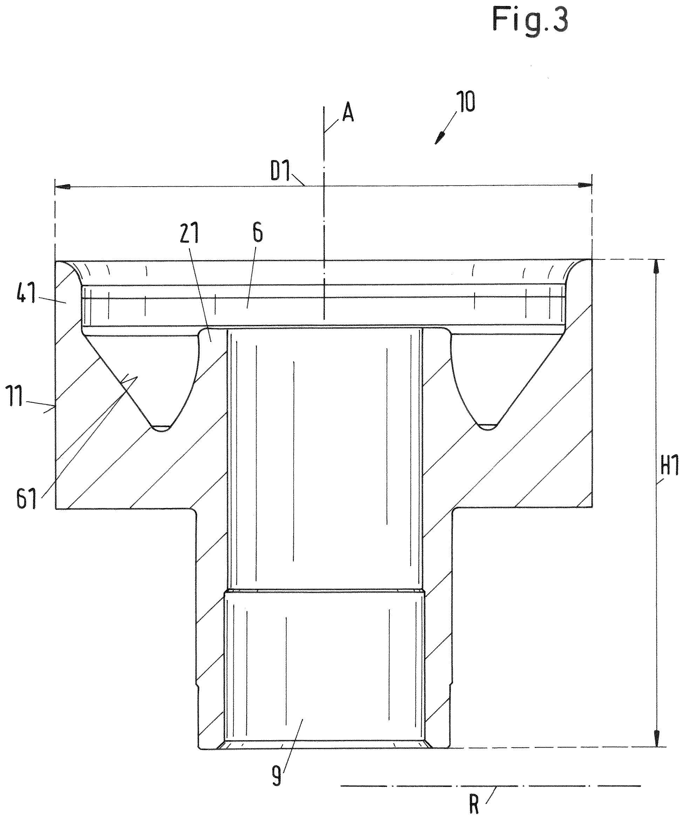

Gemäss dem erfindungsgemässen Verfahren wird zunächst ein Rohling bereitgestellt. Fig.2 zeigt in einer perspektivischen Darstellung ein Ausführungsbeispiel eines solchen Rohlings, der gesamthaft mit dem Bezugszeichen 10 bezeichnet ist. Dieser Rohling 10 ist für die Herstellung des in Fig. 1 dargestellten Laufrads 1 ausgestaltet. Zum besseren Verständnis zeigt Fig. 3 noch eine Schnittdarstellung des Rohlings 10 aus Fig.2 in einem Schnitt in axialer Richtung A.

Besonders bevorzugt ist der Rohling 10 - wie auch in Fig. 2 und Fig. 3 dargestellt - rotationssymmetrisch bezüglich der axialen Richtung A ausgestaltet.

Der Rohling 10 weist die durchgängige zentrale axiale Bohrung 9 auf, welche zur Aufnahme der Welle oder der Achse dient, auf welcher das Laufrad 1 montiert werden kann. Die Bohrung 9 wird im Bereich ihres darstellungsgemäss (Fig. 2) oberen Endes durch einen Ringkörper 21 begrenzt, welcher sich koaxial um die axiale Richtung A herum erstreckt. Im fertiggestellten Zustand des Laufrads 1 bildet dieser Ringkörper 21 einen Teil der Nabenscheibe 2.

Der Rohling 10 umfasst ferner das durch den Innenraum 6 gebildete Zentrum, welches im Betriebszustand den Einlass des Laufrads 1 darstellt, durch den ein Fluid das Laufrad 1 anströmt. Der Innenraum 6 ist als eine Kavität in dem Rohling 10 ausgestaltet, welche sich rotationssymmetrisch und koaxial um den Ringkörper 21 herum erstreckt. Radial innen wird diese Kavität von dem Ringkörper 21 begrenzt. Bezüglich der radialen Richtung R aussenliegend wird die den Innenraum 6 bildende Kavität durch einen zylindrischen Bereich 41 begrenzt, sowie durch eine im Wesentlichen kegelflächenförmige Wandung 61, welche sich in axialer Richtung A darstellungsgemäss (Fig. 3) unterhalb an den zylindrischen Bereich 41 anschliesst. Sowohl der zylindrische Bereich 41 als auch die Wandung 61 sind koaxial zur Bohrung 9 angeordnet und rotationssymmetrisch bezüglich der axialen Richtung A. Der zylindrische Bereich 41 bildet bei dem fertiggestellten Laufrad 1 einen Teil der Deckscheibe 4 (siehe Fig. 1), nämlich denjenigen Teil, welcher den Innenraum 6 in radialer Richtung R begrenzt.

Der Rohling 10 wird in radialer Richtung R durch eine Aussenfläche 11 begrenzt, welche in diesem Ausführungsbeispiel zylindermantelförmig ausgestaltet ist und sich koaxial zur Bohrung 9 um die axiale Richtung A herum erstreckt. Die Abmessung der Aussenfläche 11 in radialer Richtung R ist somit der Durchmesser D1 der zylindermantelförmigen Aussenfläche 11. Es sind natürlich auch solche Ausgestaltungen möglich, bei denen die radial aussenliegende Aussenfläche 11 des Rohlings 10 keine Zylindermantelfläche ist, sondern eine andere geometrische Ausgestaltung hat, beispielsweise die Form einer Kegelmantel- oder Kegelstumpfmantelfläche. In solchen Fällen bezeichnet D1 die maximale Abmessung der Aussenfläche 11 in radialer Richtung R, also beispielsweise den maximalen Durchmesser, der von der Aussenfläche 11 eingeschlossen wird.

Die maximale Abmessung des Rohlings 10 in axialer Richtung A ist mit der Höhe H1 bezeichnet. Die Höhe der Aussenfläche 11 des Rohlings 10 in axialer Richtung A kann kleiner oder gleich dieser Höhe H1 sein.

Der Rohling 10 ist erfindungsgemäß so ausgestaltet, dass der Durchmesser D1 seiner Aussenfläche 11 kleiner ist als die entsprechende Abmessung der Begrenzungsfläche 42 in radialer Richtung R. Die Abmessung der Begrenzungsfläche 42 in radialer Richtung R ist der Aussendurchmesser D2 des Laufrads 1 (siehe Fig. 1). Es ist also D1 < D2.

Die Höhe H2 des Laufrads 1 in axialer Richtung A (siehe Fig. 1) ist seine maximale Erstreckung in axialer Richtung A.

Die Höhe H1 des Rohlings 10 ist in diesem Ausführungsbeispiel so bemessen, dass sie gleich der Höhe H2 des fertiggestellten Laufrads 1 ist, es ist also H1 = H2.

Natürlich kann es auch vorteilhaft sein, die Höhe H1 des Rohlings 10 kleiner als die Höhe H2 des fertigen Laufrads 1 zu bemessen. Eine geeignete Wahl von H1 kann beispielsweise anhand des Kriteriums erfolgen, wieviel Volumen des Bauteils 1 durch aufbauende Fertigung hergestellt werden soll, und welche Teile des Bauteils 1 bereits im ersten subtraktiven Bearbeitungsschritt hergestellt werden sollen. Dies hängt selbstverständlich von der spezifischen Geometrie des herzustellenden Bauteils 1 und von wirtschaftlichen Faktoren ab.

Die Aussenfläche 11 des Rohlings 10 ist vorzugsweise als zusammenhängende Fläche ausgestaltet, welche keine Öffnungen aufweist.

Besonders bevorzugt besteht der Rohling 10 aus einem geschmiedeten Werkstoff, der ein Metall oder eine Metalllegierung sein kann. So ist beispielsweise Stahl in seinen bekannten Ausführungsformen geeignet oder Aluminium, Titan, Nickel, eine Nickel- oder Cobalt-Basislegierung, oder ein Buntmetall. Natürlich sind auch andere als geschmiedete Werkstoffe möglich, beispielsweise ein Gussmaterial, ein Kunststoff oder ein Verbundmaterial oder ein anderes zerspanbares Material.

Der Rohling 10 wird dabei vorzugsweise so hergestellt oder bearbeitet, dass Teile der Nabenscheibe 2 sowie der Deckscheibe 4 bereits in ihrer gewünschten Endform oder zumindest im Wesentlichen in ihrer Endform ausgestaltet sind. Mit "im Wesentlichen" ist in diesem Zusammenhang gemeint, dass natürlich zu einem späteren Zeitpunkt noch Nachbearbeitungen durchgeführt werden können, wie beispielsweise Fräsen, Drehen, Polieren, Schleifen oder ähnliches, aber die wesentliche Formgebung ist bei dem Rohling 10 bereits abgeschlossen. Vorzugsweise sind zumindest die folgenden Komponenten des Rohlings 10 so ausgestaltet, dass sie im Wesentlichen die Endform des fertiggestellten Laufrads haben: Die zentrale axiale Bohrung 9, der Ringkörper 21 als Teil der Nabenscheibe 2, der zylindrische Bereich 41 als Teil der Deckscheibe 4, der das Zentrum bildende Innenraum 6, welcher durch die Kavität im Rohling 10 realisiert ist. Ferner ist bei dem hier beschriebenen Ausführungsbeispiel die Höhe H1 des Rohlings 10 bereits im Wesentlichen identisch mit der Höhe H2 des Laufrads 1.

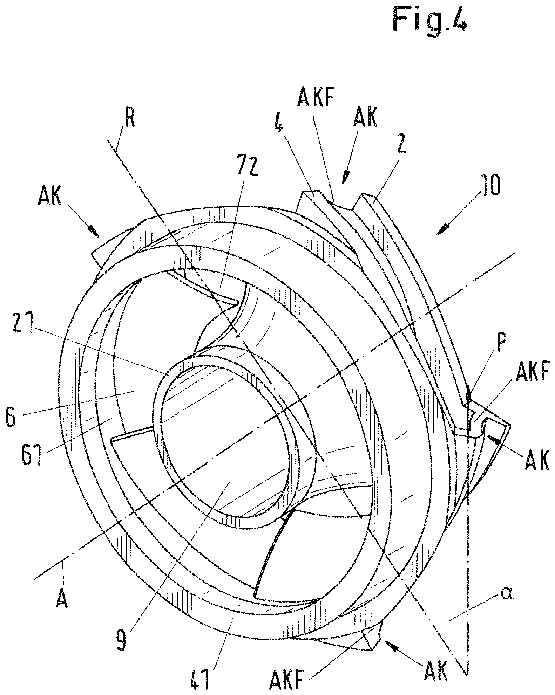

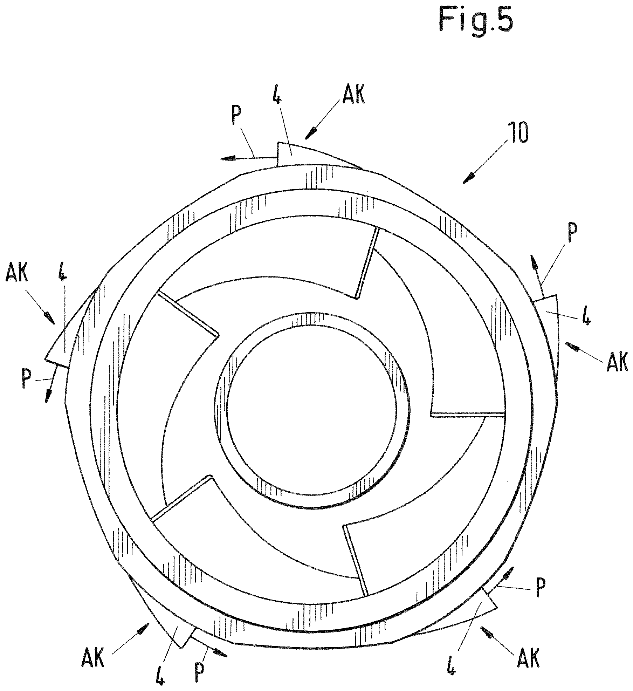

An diesem Rohling 10 wird nun ein erster subtraktiver Bearbeitungsschritt durchgeführt, welcher im Folgenden erläutert wird. Fig. 4 zeigt eine perspektivische Darstellung des Rohlings 10 nach Beendigung des ersten subtraktiven Bearbeitungsschritts. Im Speziellen wird der erste subtraktive Bearbeitungsschritt mittels zerspanender Fertigung durchgeführt. Zum besseren Verständnis zeigt Fig. 5 noch eine Draufsicht des Rohlings aus Fig.4.

Mit einem subtraktiven Bearbeitungsschritt ist dabei gemeint, dass in einem solchen Bearbeitungsschritt Material von dem Werkstück - hier dem Rohling 10 - abgetragen bzw. entfernt wird. Mit einer zerspanenden Fertigung ist wie allgemein üblich eine Fertigung gemeint, bei welcher zur Erzielung einer gewünschten geometrischen Form überschüssiges Material in Form von Spänen von dem Rohling 10 bzw. dem Werkstück abgetrennt wird. Zerspanende Fertigungen sind beispielsweise Fräsen, Drehen, Bohren, Hobeln, Feilen, Schleifen, Hohnen oder Läppen, um nur einige Beispiele zu erwähnen.

Der erste subtraktive Bearbeitungsschritt umfasst vorzugsweise ein Fräsen mittels einer Zerspanvorrichtung, die beispielsweise ein computergesteuertes Fräswerkzeug umfasst. Besonders bevorzugt ist die Zerspanvorrichtung mindestens als Fünf-Achsen-Fräsmaschine ausgestaltet, mit welcher die gewünschte geometrische Form aus dem Rohling 10 herausgearbeitet wird. Üblicherweise wird das Fräswerkzeug von einem Manipulator geführt, wobei die Führung computergestützt erfolgt.

In dem ersten subtraktiven Bearbeitungsschritt werden die sich in die radiale Richtung R erstreckenden Aussenkonturen AK im Bereich der Aussenfläche 11 herausgearbeitet. Die Aussenkonturen AK werden dabei jeweils mit einer Ausssenkonturfläche AKF versehen, deren Flächennormale (in Fig.4 und 5 mit einem Pfeil P angedeutet) sich unter einem Winkel α von 0° bis 90° zu der radialen Richtung R ertreckt. Zudem wurde von jedem Kanal 7 ein Teil hergestellt, welcher sich von dem ersten Ende 72 des jeweiligen Kanals bis in die Aussenfläche 11 des Rohlings 10 erstreckt. Das erste Ende 72 jedes Kanals 7 mündet in die Wandung 61, welche den Innenraum 6 begrenzt. Dabei ist der Bereich der Einmündung jedes Kanals 7 in die Aussenfläche 11 als teilweiser geschlossener Kanalabschnitt ausgestaltet. Diese Einmündungen werden jeweils in die Aussenfläche 11 gefräst.

Das heisst, nach Beendigung des ersten subtraktiven Bearbeitungsschritts umfasst der Rohling 10 die sich in radialer Richtung erstreckenden Aussenkonturen AK im Bereich der Aussenfläche 11 (siehe Fig. 4 und Fig.5) und einen Teil der Kanäle, die an einem ersten Ende 72 eines Kerns K eines Zentrums 6 des Rohlings beginnen und sich bis an die Aussenfläche 11 des Rohlings 10 erstrecken. In dem Ausführungsbespiel umfassen die Aussenkonturen AK Teile der Deckscheibe 4 sowie Teile der Nabenscheibe 2.

Die Teile jedes Kanals 7, welche in dem ersten subtraktiven Bearbeitungsschritt hergestellt werden, also jeweils der Kanalabschnitt von dem ersten Ende 72 des Kanals in der Wandung 61 des Innenraums 6 bis zur Einmündung des jeweiligen Kanals in die Aussenfläche 11 des Rohlings 10, werden vorzugsweise derart gefertigt, dass sie zumindest im Wesentlichen ihre Endform aufweisen.

Somit hat der Rohling 10 bis auf diejenigen Bereiche des Laufrads 1, welche radial aussenliegend bezüglich der Aussenfläche 11 des Rohlings 10 angeordnet sind, bereits zumindest im Wesentlichen die Endform des fertigen Laufrads 1.

Es versteht sich, dass der erste subtraktive Bearbeitungsschritt sowohl ein Fräsen von der Wandung 61 bzw. dem Innenraum 6 aus als auch ein Fräsen von der Aussenfläche 11 aus umfassen kann.

Ein Vorteil der rein zerspanenden Fertigung ist es, dass bei einem Rohling 10 aus einem geschmiedeten Werkstoff alle die positiven Eigenschaften des geschmiedeten Werkstoffs erhalten bleiben.

Nachdem der erste subtraktive Bearbeitungsschritt beendet ist, werden die noch fehlenden Teile des Bauteils 1 mittels einer aufbauenden Fertigung hergestellt und das Bauteil 1 in seine endgültige Form gebracht. Fig. 1 zeigt in einer perspektivischen Darstellung das fertiggestellte Bauteil 1, hier also das gedeckte Laufrad 1, welches ausgehend von dem Rohling 10, der in in Fig. 2 und 3 dargestellt ist, hergestellt ist.

Mit einer aufbauenden Fertigung ist dabei eine Fertigung gemeint, bei welcher ein formloses oder formneutrales Material aufgetragen wird. Dabei wird üblicherweise das formlose Material, z. B. ein Pulver, oder das formneutrale Material, z. B. ein bandförmiges Material, aufgeschmolzen, um die noch fehlenden Teile des Bauteils 1 auf dem Rohling bzw. auf der bereits existierenden Struktur aufzubauen. Eine aufbauende Fertigung is also eine Fertigung aus einem formlosen oder formneutralen Material.

Die aufbauende Fertigung umfasst einen oder mehrere additive Bearbeitungsschritt(e). Mit einem additiven Bearbeitungsschritt bzw. mit einer additiven Fertigung, die auch als generative Fertigung bezeichnet wird, ist dabei ein Bearbeitungsschritt gemeint, bei welchem Material auf das Werkstück, hier also den Rohling 10, aufgebracht oder aufgetragen wird. Üblicherweise werden bei einer additiven Fertigung aus einem formlosen Material, beispielsweise Flüssigkeiten oder Pulver, oder aus einem formneutralen Material, beispielsweise band- oder drahtförmigem Material, mittels chemischer und/oder physikalischer Prozesse die gewünschten Strukturen generiert, z. B. durch Aufbauen auf einem Werkstück. An sich bekannte additive Fertigungsmethoden für metallische Werkstoffe sind beispielsweise Auftragschweissverfahren, speziell Inert-Gas-Verfahren wie Wolfram-Inert-Gas-Schweissen (WIG) oder Laserauftragschweissen, oder Plasmaverfahren oder selektives Laserschmelzen (SLM Selective Laser Melting) oder selektives Lasersintern (SLS).

Nachdem also der erste subtraktive Bearbeitungsschritt beendet ist, werden die noch fehlenden Bereiche des Bauteils 1, insbesondere sind dies die radial aussenliegenden Teile der Trennwände 3 und der Kanäle 7, Teile der Deckscheibe 4, sowie Teile der Nabenscheibe 2 in aufbauender Fertigung generiert. Zudem werden mittels der aufbauenden Fertigung Teile des Ringkörpers 21 und/oder des zylindrischen Bereich 41 hergestellt.

Dabei wird in diesem Ausführungsbeispiel zunächst mit der aufbauenden Fertigung an den jeweiligen Ausssenkonturflächen AKF der jeweiligen Aussenkonturen AK begonnen und die Kanäle 7 fertiggestellt. Das heisst die aufbauende Fertigung erfolgt zunächst in Richtung der Flächennormalen der Ausssenkonturflächen AKF. Nach Fertigstellung der Kanäle 7 wird das Bauteil dann in seine endgültige Form gebracht.

In einer bevorzugten Ausführungsform werden in der aufbauenden Fertigung die noch fehlenden Teile mittels Laserauftragschweissens generiert. Das Verfahren des Laserauftragsschweissens mit seinen verschiedenen Varianten ist dem Fachman hinlänglich bekannt und bedarf deshalb hier keiner Erläuterung.

Dabei ist es möglich, die aufbauende Fertigung schichtweise durchzuführen.

Eine andere ebenfalls bevorzugte Ausführungsform ist es, bei der aufbauenden Fertigung das Bauteil 1 komponentenweise aufzubauen, d. h. die einzelnen Komponenten des Bauteils 1 wie z.B. die Trennwände 3 oder die Überdeckungen der Kanäle 7 werden in dem Sinne sukzessive aufgebaut, dass zunächst eine Komponente, z. B. die Trennwände, komplett bis zu ihrem Endzustand aufgebaut wird, und anschliessend die nächste Komponente vollständig aufgebaut wird. Dieser Vorgang wird solange wiederholt, bis das Bauteil fertiggestellt ist.

Ferner ist es möglich, dass die einzelnen Komponenten des Bauteils 1 nicht komplett aufgebaut werden, sondern immer nur teilweise, das heisst, man baut zunächst einen Teil der Trennwände 3 auf, dann einen Teil der Überdeckungen der Kanäle 7, dann wieder einen Teil der Trennwände 3 usw. Dabei kann vorzugsweise nach einem teilweisen Aufbau ein weiterer subtraktiver Bearbeitungsschritt durchgeführt werden.

Wie bereits erwähnt kann gemäss einer bevorzugten Ausführungsform die aufbauende Fertigung mehrere additive Bearbeitungsschritte umfassen, um das Bauteil 1 sukzessive aufzubauen. Dabei ist es insbesondere bevorzugt, wenn zwischen den additiven Bearbeitungsschritten mindestens ein weiterer subtraktiver Bearbeitungsschritt durchgeführt wird.

In einem solchen weiteren subtraktiven Bearbeitungsschritt können beispielsweise durch zerspanende Fertigung Abweichungen von der gewünschten Geometrie ausgeglichen werden, welche in dem vorgängigen additiven Bearbeitungsschritt entstanden sind. So können in diesem weiteren subtraktiven Bearbeitungsschritt beispielsweise Fräs- oder Schleifarbeiten durchgeführt werden, um solches Material abzutragen, das im additiven Bearbeitungsschritt zu viel aufgetragen wurde, oder um Übergänge zwischen benachbarten Schichten zu egalisieren, zu schleifen oder ähnliches.

Besonders bevorzugt ist es, wenn zwischen zwei additiven Bearbeitungsschritten jeweils ein weiterer subtraktiver Bearbeitungsschritt durchgeführt wird, d.h. die additiven Bearbeitungsschritte und die weiteren subtraktiven Bearbeitungsschritte werden abwechselnd bzw. wechselweise durchgeführt. Hiermit lässt sich eine besonders hohe Güte und Präzision des Bauteils 1 gewährleisten.

Heutzutage sind moderne Bearbeitungsmaschinen bekannt, mit welchen sowohl subtraktive Bearbeitungsschritte als auch additive Bearbeitungsschritte in der gleichen Bearbeitungskammer durchgeführt werden können, ohne dass es dabei notwendig ist, den Rohling 10 bzw. das Bauteil 1 neu einzuspannen oder in eine andere Halterung umzusetzen. Der Rohling 10 wird nur einmal in eine Halterung eingespannt und kann dann wahl- oder wechselweise subtraktiv oder additiv bearbeitet werden. Solche Bearbeitungsmaschinen umfassen dazu mehrere Bearbeitungsköpfe, von denen mindestens einer für eine subtraktive Fertigung ausgestaltet ist, also beispielsweise als Fräswerkzeug, und mindestens einer für die additive Fertigung, also beispielsweise als Vorrichtung zum Laserauftragsschweissen. Nach Beendigung z. B. eines additiven Bearbeitungsschritts wechselt die Bearbeitungsmaschine selbständig den Bearbeitungskopf und kann anschliessend einen subtraktiven Bearbeitungsschritt durchführen und umgekehrt. Hierdurch wird eine besonders schnelle und hoch präzise Herstellung des Bauteils 1 ermöglicht.

Durch die Erfindung wird ferner ein sinngemäss gleiches Verfahren für die Reparatur von beschädigten oder verschlissenen Bauteilen einer Rotationsmaschine vorgeschlagen. Bei diesem Verfahren zur Reparatur eines Bauteils 1 einer Rotationsmaschine, also beispielsweise eines Laufrads 1 einer Pumpe, wird in sinngemäss gleicher Weise vorgegangen wie vorangehend beschrieben, jedoch wird der Rohling 10 aus einem beschädigten bzw. verschlissenen Laufrad 1 generiert. Dies kann beispielsweise ein Laufrad 1 sein, bei welchem die Austrittskanten 31 der Schaufeln 3 bzw. Trennwände 3 oder die radial äusseren Bereiche der Kanäle 7 Schädigungen aufweisen. Bei dem Verfahren werden beschädigte Bereiche des Bauteils 1 an der Begrenzungsfläche 42 oder an den Kanälen 7 oder an einer Trennwand identifiziert, ferner wird durch zerspanendes oder trennendes Entfernen der beschädigten Bereiche ein Rohling 10 hergestellt, welcher das Zentrum des Bauteils 1 umfasst, und mittels einer aufbauenden Fertigung auf dem Rohling 10 werden die entfernten beschädigten Bereiche ersetzt, um die Endform des Bauteils 1 herzustellen.

Das erfindungsgemässe Verfahren zur Reparatur des Bauteils ist insbesondere dadurch gekennzeichnet, dass in einem ersten subtraktiven Bearbeitungsschritt der Rohling 10 derart subtraktiv bearbeitet wird, dass eine sich mindestens in die radiale Richtung erstreckende Aussenkontur AK im Bereich der Aussenfläche 11 herausgearbeitet wird. Anschliessend werden die Kanäle 7 mittels einer aufbauenden Fertigung auf dem Rohling 10 fertiggestellt, wobei bevorzugt zusätzlich alle entfernten beschädigten Bereiche mittels der aufbauenden Fertigung wieder ergänzt werden.

Bei dem erfindungsgemässen Verfahren zur Reparatur eines Bauteils wird also in sinngemäss gleicher Weise wie bei dem Verfahren zur Herstellung eines Bauteils der Rohling 10 hergestellt, auf welchem anschliessend die noch fehlenden Komponenten oder Bereiche des Bauteils 1 mittels aufbauender Fertigung hergestellt werden. Bei dem Verfahren zur Reparatur wird dabei der Rohling 10 durch das Entfernen der beschädigten Bereiche des Bauteils generiert. Nachdem der Rohling 10 durch Entfernen der beschädigten Bereiche hergestellt ist, entspricht er vom Prinzip dem Rohling 10 des Verfahrens zur Herstellung des Bauteils nach Durchführung des ersten subtraktiven Bearbeitungsschritts (siehe Fig. 4 und Fig.5).

Das Entfernen der beschädigten Bereiche kann mit einem zerspanenden Verfahren, beispielsweise mittels Fräsen erfolgen. Es ist aber auch alternativ oder ergänzend möglich, die beschädigten Bereiche durch einen trennenden Prozess, wie beispielsweise Stanzen, Schneiden, Brennschneiden oder Sägen zu entfernen.

Die Erläuterungen bezüglich des Verfahrens zur Herstellung des Bauteils 1 einschliesslich der vorteilhaften Massnahmen und Varianten gelten in gleicher oder sinngemäss gleicher Weise auch für das Verfahren zur Reparatur des Bauteils 1.

Sowohl bei dem erfindungsgemässen Verfahren zur Herstellung eines Bauteils als auch bei dem erfindungsgemässen Verfahren zur Reparatur eines Bauteils ist es möglich, für die aufbauende Fertigung ein oder mehrere Materialien zu verwenden, die verschieden von dem Material sind, aus welchem der Rohling 10 besteht. Auch ist es natürlich möglich, während der aufbauenden Fertigung das Material zu wechseln, also für die aufbauende Fertigung verschiedene, beispielsweise bis zu vier verschiedene Materialien zu verwenden. So kann beispielsweise für einen ersten additiven Bearbeitungsschritt ein erstes Material verwendet werden, das gleich oder verschieden von dem Material des Rohlings 10 ist, und anschliessend für einen weiteren additiven Bearbeitungsschritt ein zweites Material, das verschieden von dem ersten Material ist.

Auf diese Weise lassen sich auch Beschichtungen generieren, beispielsweise Verschleissschutzbeschichtungen, um insbesondere solche Bereiche des Bauteils zu schützen, in welchem im Betriebszustand die höchsten Belastungen auftreten. Dabei können solche Beschichtungen sowohl direkt auf Bereichen generiert werden, die in dem subtraktiven Bearbeitungsschritt hergestellt worden sind, als auch auf Bereichen, die in einem vorangehenden additiven Bearbeitungsschritt generiert worden sind.

Auf diese Weise lassen sich gezielt Bereiche des Bauteils bezüglich ihrer Eigenschaften wie Härte, Verschleissfestigkeit, Korrosionsbeständigkeit usw. optimieren.

Bei dem Laufrad einer Pumpe ist es so beispielsweise möglich, die radial aussenliegenden Bereiche der Trennwände (Schaufeln) zwischen den Kanälen, also die Austrittskanten der Schaufeln sowie der Bereich der radialen Begrenzungsfläche des Laufrads. Diese Bereiche können dann bei der aufbauenden Fertigung aus einem besonders verschleissfestem Material gefertigt werden.

Natürlich ist es auch möglich, während der aufbauenden Fertigung das Material zu wechseln, also beispielsweise bei der aufbauenden Fertigung zunächst ein Material zu verwenden, das beispielsweise das gleiche ist, wie das Material des Rohlings, und anschliessend beispielsweise für die radial aussenliegenden Bereiche des Bauteils ein davon verschiedenes Material.

Auf diese Weise ist es auch möglich, mittels der aufbauenden Fertigung eine Beschichtung auf einzelnen Komponenten oder Bereichen des Bauteils zu generieren, beispielsweise eine Verschleissschutzbeschichtung.

Durch diese Massnahme ist es somit z. B. möglich, an Verschleissflächen des Bauteils gezielt eine höhere Härte des Bauteils zu realisieren. Hierdurch lässt sich die Lebensdauer des Bauteils erhöhen. Bei dem Laurad einer Pumpe ist es insbesondere dann auch möglich, auf einen Verschleissring zu verzichten, und den Verschleissring, der beispielsweise auf dem Laufrad vorgesehen sein kann, durch eine Beschichtung zu ersetzen, die im Rahmen der aufbauenden Fertigung hergestellt wird.

Auch wenn die Erfindung anhand der Fertigung bzw. der Reparatur eines Laufrads 1 erläutert wurde, so ist die Erfindung natürlich nicht auf solche Bauteile 1 bzw. ihre Herstellung bzw. ihre Reparatur beschränkt, sondern eignet sich für eine Vielzahl anderer Bauteile 1, insbesondere für solche Bauteile 1, bei denen mindestens ein innerer Kanal 7 vorgesehen ist, dessen Geometrie es nicht zulässt, ihn mit vernünftigem Aufwand zerspanend oder subtraktiv aus einem Rohling 10 herauszuarbeiten.

Insbesondere kann das Bauteil 1 auch als Leitrad oder als Diffusor einer Rotationsmaschine ausgestaltet sein, wobei die Rotationsmaschine insbesondere eine Pumpe oder eine Turbine oder ein Kompressor oder ein Verdichter oder ein Expander sein kann.

Der innere Kanal kann beispielsweise auch ein Kühlkanal z.B. in einer Turbinenschaufel sein, beispielsweise ein Kühlluftkanal.

## Patentansprüche

1. Verfahren zur Herstellung eines Bauteils einer Rotationsmaschine, welches sich in einer axialen Richtung (A) sowie in einer dazu senkrechten radialen Richtung (R) erstreckt, und welches mindestens einen inneren Kanal (7) aufweist, der sich von einem ersten Ende (72) eines Kerns (K) eines Zentrums (6) des Bauteils, und bis an ein zweites Ende (71) an einer radialen Begrenzungsfläche (42) des Bauteils erstreckt, und zumindest teilweise geschlossen ist, **dadurch gekennzeichnet, dass**
- ein Rohling (10) bereitgestellt wird, welcher den Kern (K) des Bauteils umfasst, und welcher Rohling (10) durch eine Aussenfläche (11) in radialer Richtung (R) begrenzt wird, wobei die maximale Abmessung (D1) der Aussenfläche (11) in radialer Richtung (R) kleiner ist als die entsprechende Abmessung der Begrenzungsfläche (42) in radialer Richtung (R),
- wobei in einem ersten subtraktiven Bearbeitungsschritt der Rohling (10) derart subtraktiv bearbeitet wird, dass
- eine sich mindestens in die radiale Richtung (R) erstreckende Aussenkontur (AK) im Bereich der Aussenfläche (11) herausgearbeitet wird, sowie ein Teil des Kanals (7) hergestellt wird, der sich zumindest teilweise radial im Rohling (10) bis zum ersten Ende (72) erstreckt,
- und anschliessend der Kanal (7) mittels einer aufbauenden Fertigung auf dem Rohling (10) fertiggestellt wird.

2. Verfahren nach Anspruch 1, wobei die Aussenkontur (AK) Teile einer Deckscheibe (4) des Bauteils und/oder Teile einer Nabenscheibe (2) des Bauteils umfasst.

3. Verfahren nach einem der vorangehenden Ansprüche, bei welchem die aufbauende Fertigung schichtweise in zumindest einer zur axialen Richtung (A) senkrechten Richtung durchgeführt wird.

4. Verfahren nach einem der vorangehenden Ansprüche, bei welchem die aufbauende Fertigung schichtweise zusätzlich in die axiale Richtung (A) durchgeführt wird.

5. Verfahren nach einem der vorangehenden Ansprüche, bei welchem die aufbauende Fertigung schichtweise zusätzlich in eine sich zu der radialen Richtung (R) unter einem Winkel (α) ertreckende Umfangsrichtung (U) durchgeführt wird.

6. Verfahren nach einem der vorangehenden Ansprüche, wobei das Bauteil mit einer Mehrzahl von inneren Kanälen (7) hergestellt wird, von denen sich jeder von dem ersten Ende (72) vom Kern (K) des Bauteils bis an ein zweites Ende (71) an der radialen Begrenzungsfläche (42) des Bauteils erstreckt, wobei benachbarte Kanäle (7) jeweils durch eine Trennwand (3) getrennt sind.

7. Verfahren nach einem der vorangehenden Ansprüche, bei welchem der Rohling (10) vor dem ersten subtraktiven Bearbeitungsschritt eine zentrale Bohrung (9) aufweist, welche radial innenliegend so angeordnet ist, dass im fertiggestellten Zustand des Bauteils jedes im Zentrum (6) liegende erste Ende eines Kanals (7) durch einen Ringkörper (21) von der zentralen Bohrung (9) getrennt ist.

8. Verfahren nach einem der vorangehenden Ansprüche, wobei die aufbauende Fertigung mehrere additive Bearbeitungsschritte umfasst, um das Bauteil (1) sukzessive aufzubauen.

9. Verfahren nach Anspruch 8, wobei zwischen den additiven Bearbeitungsschritten mindestens ein weiterer subtraktiver Bearbeitungsschritt durchgeführt wird.

10. Verfahren nach einem der vorangehenden Ansprüche, bei welchem nach dem ersten subtraktiven Bearbeitungsschritt das Bauteil komponentenweise aufgebaut wird, wobei vorzugweise zunächst nur jede Trennwand (3) fertiggestellt wird.

11. Verfahren nach einem der vorangehenden Ansprüche, bei welchem die aufbauende Fertigung mit Hilfe eines Lasers durchgeführt wird.

12. Verfahren nach einem der vorangehenden Ansprüche, wobei das Bauteil als Laufrad, als Leitrad oder als Diffusor einer Rotationsmaschine ausgestaltet ist, insbesondere einer Pumpe, einer Turbine, eines Kompressors, eines Verdichters oder eines Expanders.

13. Verfahren zur Reparatur eines Bauteils einer Rotationsmaschine, welches sich in einer axialen Richtung sowie in einer dazu senkrechten radialen Richtung erstreckt, und welches eine Mehrzahl von inneren Kanälen (7) umfasst, von denen sich jeder von einem ersten Ende (72) im Zentrum (6) des Bauteils bis an ein zweites Ende (71) an der radialen Begrenzungsfläche (42) des Bauteils erstreckt, wobei benachbarte Kanäle (7) jeweils durch eine Trennwand (3) getrennt sind, und beschädigte Bereiche des Bauteils an der Begrenzungsfläche (42) oder an einem der Kanäle (7) oder an einer Trennwand (3) identifiziert werden, dass ferner durch zerspanendes oder trennendes Entfernen der beschädigten Bereiche ein Rohling (10) hergestellt wird, welcher einen Kern (K) des Zentrum (6) des Bauteils umfasst, und dass mittels einer aufbauenden Fertigung auf dem Rohling (10) die entfernten beschädigten Bereiche ersetzt werden, um die Endform des Bauteils (1) herzustellen, wobei
- der Rohling (10) durch eine Aussenfläche (11) in radialer Richtung (R) begrenzt wird, wobei die maximale Abmessung (D1) der Aussenfläche (11) in radialer Richtung (R) kleiner ist als die entsprechende Abmessung der Begrenzungsfläche (42) in radialer Richtung (R), U
- in einem ersten subtraktiven Bearbeitungsschritt der Rohling (10) derart subtraktiv bearbeitet wird, dass
- eine sich mindestens in die radiale Richtung (R) erstreckende Aussenkontur (AK) im Bereich der Aussenfläche (11) herausgearbeitet wird,
- und anschliessend die Kanäle (7) mittels einer aufbauenden Fertigung auf dem Rohling (10) fertiggestellt wird, wobei bevorzugt zusätzlich alle entfernten beschädigten Bereiche mittels der aufbauenden Fertigung wieder ergänzt werden.

14. Verfahren zur Herstellung oder Verfahren zur Reparatur eines Bauteils nach einem der vorangehenden Ansprüche, bei welchem für die aufbauende Fertigung mindestens ein Material verwendet wird, das verschieden von dem Material ist, aus welchem der Rohling (10) besteht.

15. Bauteil einer Rotationsmaschine hergestellt oder repariert nach einem Verfahren gemäss einem der vorangehenden Ansprüche, wobei das Bauteil insbesondere als ein Laufrad, als Leitrad oder als Diffusor einer Rotationsmaschine, insbesondere einer Pumpe, einer Turbine, eines Kompressors, eines Verdichters oder eines Expanders ausgebildet ist.

## Claims

1. A method for producing a component of a rotary machine which extends in an axial direction (A) and in a radial direction (R) perpendicular thereto and which has at least one inner channel (7) which extends from a first end (72) of a core (K) of a center (6) of the component and to a second end (71) at a radial limiting surface (42) of the component and is at least partially closed, **characterized in that**
- a blank (10) is provided which comprises the core (K) of the component and which blank (10) is delimited by an outer surface (11) in the radial direction (R), wherein the maximum dimension (D1) of the outer surface (11) in the radial direction (R) is smaller than the corresponding dimension of the limiting surface (42) in the radial direction (R),
- wherein in a first subtractive processing step the blank (10) is subtractively processed such that
- an outer contour (AK) extending at least in the radial direction (R) is elaborated out in the area of the outer surface (11) and a part of the channel (7) is produced which extends at least partially radially in the blank (10) to the first end (72),
- and subsequently the channel (7) is completed by means of a build-up manufacturing on the blank (10).

2. The method according to claim 1, wherein the outer contour (AK) comprises parts of a cover disk (4) of the component and/or parts of a hub disk (2) of the component.

3. The method according to any one of the preceding claims, in which the build-up manufacturing is executed layer-by-layer in at least one direction perpendicular to the axial direction (A).

4. The method according to any one of the preceding claims, in which the build-up manufacturing is executed layer-by-layer additionally in the axial direction (A).

5. The method according to any one of the preceding claims, in which the build-up manufacturing is executed layer-by-layer additionally in a circumferential direction (U) which extends in an angle (α) to the radial direction (R).

6. The method according to any one of the preceding claims, wherein the component is produced with a plurality of inner channels (7), each of which extends from the first end (72) of the core (K) of the component to a second end (71) at the radial limiting surface (42) of the component, wherein adjacent channels (7) are each separated by a separating wall (3).

7. The method according to any one of the preceding claims, in which the blank (10) has a central bore (9) before the first subtractive processing step, which bore is arranged radially internal in such a way, that each first end of a channel (7) positioned in the center (6) is separated from the central bore (9) by an annular body (21) in the completed state of the component.

8. The method according to any one of the preceding claims, wherein the build-up manufacturing comprises several additive processing steps in order to build up the component (1) successively.

9. The method according to claim 8, wherein at least one additional subtractive processing step is executed between the additive processing steps.

10. The method according to any one of the preceding claims, in which, after the first subtractive processing step, the component is built up part-by-part, wherein, preferably, initially only each separating wall (3) is completed.

11. The method according to any one of the preceding claims, in which the build-up manufacturing is executed with the aid of a laser.

12. The method according to any one of the preceding claims, wherein the component is designed as an impeller, as a guide wheel, or as a diffuser of a rotary machine, especially of a pump, of a turbine, of a compressor, of a compactor or of an expander.

13. A method for repairing a component of a rotary machine which extends in an axial direction and in a radial direction perpendicular thereto, and which comprises a plurality of inner channels (7), each of which extends from a first end (72) in the center (6) of the component to a second end (71) at the radial limiting surface (42) of the component, wherein adjacent channels (7) are each separated by a separating wall (3), and damaged areas of the component at the limiting surface (42) or at one of the channels (7) or at a separating wall (3) are identified, in that a blank (10) which comprises a core (K) of the center (6) of the component, is further produced by machining or separating removal of the damaged areas, and that the removed damaged areas are replaced by means of a build-up manufacturing on the blank (10) in order to produce the final shape of the component (1), wherein
- the blank (10) is delimited in the radial direction (R) by an outer surface (11), wherein the maximum dimension (D1) of the outer surface (11) in the radial direction (R) is smaller than the corresponding dimension of the limiting surface (42) in the radial direction (R),
- in a first subtractive processing step the blank (10) is processed subtractively in such a way, that
- an outer contour (AK) extending at least in the radial direction (R) is elaborated out in the area of the outer surface (11),
- and subsequently the channels (7) are completed by means of a build-up manufacturing on the blank (10), wherein preferably additionally all removed damaged areas are added again by means of the build-up manufacturing.

14. The method for producing or the method for repairing of a component according to any one of the preceding claims, in which at least one material is used for the build-up manufacturing, which is different from the material of which the blank (10) is made.

15. A component of a rotary machine produced or repaired according to a method according to any one of the preceding claims, wherein the component is designed especially as an impeller, as a guide wheel or as a diffuser of a rotary machine, especially of a pump, of a turbine, of a compressor, of a compactor, or of an expander.

## Revendications

1. Procédé de production d'un composant d'une machine rotative, qui s'étend dans une direction axiale (A) ainsi que dans une direction radiale (R) perpendiculaire à celle-ci, et qui présente au moins un canal intérieur (7) qui s'étend depuis une première extrémité (72) d'un noyau (K) d'un centre (6) du composant, et jusqu'à une deuxième extrémité (71) au niveau d'une surface de délimitation radiale (42) du composant, et est au moins partiellement fermé, **caractérisé en ce que**
- une ébauche (10) est mise à disposition, laquelle comprend le noyau (K) du composant, et laquelle ébauche (10) est délimitée par une surface extérieure (11) dans la direction radiale (R), la dimension maximale (D1) de la surface extérieure (11) dans la direction radiale (R) étant inférieure à la dimension correspondante de la surface de délimitation (42) dans la direction radiale (R),
- dans une première étape d'usinage soustractif, l'ébauche (10) étant usinée de manière soustractive de telle sorte que
- un contour extérieur (AK) s'étendant au moins dans la direction radiale (R) est usiné dans la région de la surface extérieure (11), et une partie du canal (7) est fabriquée, laquelle s'étend au moins partiellement radialement dans l'ébauche (10) jusqu'à la première extrémité (72),
- et ensuite le canal (7) est fini au moyen d'une fabrication par accumulation sur l'ébauche (10).

2. Procédé selon la revendication 1, dans lequel le contour extérieur (AK) comprend des parties d'un disque de recouvrement (4) du composant et/ou des parties d'un disque de moyeu (2) du composant.

3. Procédé selon l'une quelconque des revendications précédentes, dans lequel la fabrication par accumulation est réalisée par couches dans au moins une direction perpendiculaire à la direction axiale (A).

4. Procédé selon l'une quelconque des revendications précédentes, dans lequel la fabrication par accumulation est réalisée par couches en plus dans la direction axiale (A).

5. Procédé selon l'une quelconque des revendications précédentes, dans lequel la fabrication par accumulation est réalisée par couches en plus dans une direction périphérique (U) s'étendant selon un angle (α) par rapport à la direction radiale (R).

6. Procédé selon l'une quelconque des revendications précédentes, dans lequel le composant est fabriqué avec une pluralité de canaux intérieurs (7), dont chacun s'étend depuis la première extrémité (72) du noyau (K) du composant jusqu'à une deuxième extrémité (71) au niveau de la surface de délimitation radiale (42) du composant, des canaux adjacents (7) étant séparés à chaque fois par une paroi de séparation (3).

7. Procédé selon l'une quelconque des revendications précédentes, dans lequel l'ébauche (10) présente avant la première étape d'usinage soustractif un alésage central (9) qui est disposé radialement à l'intérieur de telle sorte que dans l'état fini du composant, chaque première extrémité d'un canal (7) située au centre (6) est séparée de l'alésage central (9) par un corps annulaire (21).

8. Procédé selon l'une quelconque des revendications précédentes, dans lequel la fabrication par accumulation comprend plusieurs étapes d'usinage additif pour construire successivement le composant (1).

9. Procédé selon la revendication 8, dans lequel au moins une autre étape d'usinage soustractif est réalisée entre les étapes d'usinage additif.

10. Procédé selon l'une quelconque des revendications précédentes, dans lequel après la première étape d'usinage soustractif, le composant est construit pièce par pièce, de préférence seulement chaque paroi de séparation (3) étant d'abord finie.

11. Procédé selon l'une quelconque des revendications précédentes, dans lequel la fabrication par accumulation est réalisée à l'aide d'un laser.

12. Procédé selon l'une quelconque des revendications précédentes, dans lequel le composant est réalisé sous forme de roue à aubes, de roue directrice ou de diffuseur d'une machine rotative, en particulier d'une pompe, d'une turbine, d'un compresseur, d'un condenseur ou d'un détendeur.

13. Procédé de réparation d'un composant d'une machine rotative, qui s'étend dans une direction axiale ainsi que dans une direction radiale perpendiculaire à celle-ci, et qui comprend une pluralité de canaux intérieurs (7), dont chacun s'étend depuis une première extrémité (72) au centre (6) du composant jusqu'à une deuxième extrémité (71) au niveau de la surface de délimitation radiale (42) du composant, des canaux adjacents (7) étant séparés à chaque fois par une paroi de séparation (3), et des zones endommagées du composant au niveau de la surface de délimitation (42) ou au niveau de l'un des canaux (7) ou au niveau d'une paroi de séparation (3) étant identifiées, en ce qu'en outre une ébauche (10) est fabriquée par enlèvement de copeaux ou par séparation des zones endommagées, laquelle ébauche comprend un noyau (K) du centre (6) du composant, et en ce que les zones endommagées enlevées sont remplacées au moyen d'une fabrication par accumulation sur l'ébauche (10) afin de fabriquer la forme finale du composant (1), dans lequel
- l'ébauche (10) est limitée dans la direction radiale (R) par une surface extérieure (11), la dimension maximale (D1) de la surface extérieure (11) dans la direction radiale (R) étant inférieure à la dimension correspondante de la surface de délimitation (42) dans la direction radiale (R),
- dans une première étape d'usinage soustractif, l'ébauche (10) est usinée de manière soustractive de telle sorte que
- un contour extérieur (AK) s'étendant au moins dans la direction radiale (R) est usiné dans la région de la surface extérieure (11),
- et ensuite les canaux (7) sont finis au moyen d'une fabrication par accumulation sur l'ébauche (10), de préférence en plus toutes les zones endommagées enlevées étant complétées à nouveau au moyen de la fabrication par accumulation.

14. Procédé de production ou procédé de réparation d'un composant selon l'une quelconque des revendications précédentes, dans lequel au moins un matériau est utilisé pour la fabrication par accumulation, qui est différent du matériau dont est constituée l'ébauche (10).

15. Composant d'une machine rotative produit ou réparé selon un procédé selon l'une quelconque des revendications précédentes, dans lequel le composant est réalisé en particulier sous forme de roue à aubes, de roue directrice ou de diffuseur d'une machine rotative, en particulier d'une pompe, d'une turbine, d'un compresseur, d'un condenseur ou d'un détendeur.
